# EUROPEAN PATENT SPECIFICATION

(11) **EP 4 231 822 B1**
(45) Date of publication and mention of the grant of the patent: **24.07.2024**
(21) Application number: 21798975.5
(22) Date of filing: 20.10.2021
(51) Int. Cl.: A01M 7/00, A01B 69/00, A01B 79/00

(54) **METHODS FOR AVOIDING/REDUCING RESISTANCES WHEN SELECTIVELY APPLYING PESTICIDES**
VERFAHREN ZUR VERMEIDUNG/VERMINDERUNG VON RESISTENZEN BEI DER SELEKTIVEN ANWENDUNG VON PESTIZIDEN
PROCÉDÉS POUR ÉVITER/RÉDUIRE LES RÉSISTANCES LORS DE L'APPLICATION SÉLECTIVE DE PESTICIDES

(30) Priority: 22.10.2020 EP 20203287
(43) Date of publication of application: 30.08.2023
(73) Proprietor: BASF Agro Trademarks GmbH, 67063 Ludwigshafen am Rhein (DE)
(72) Inventor: DELATREE, Clemens Christian, 48147 Münster (DE); FREUDIGMANN, Hans-Arndt, 70839 Gerlingen-Schillerhöhe (DE)
(74) Representative: BASF IP Association
(86) International application number: PCT/EP2021/079133
(87) International publication number: WO 2022/084412

(56) References cited:
- EP-A1- 3 262 934
- EP-A1- 3 287 007
- WO-A1-2020/201046
- US-A- 5 050 771
- US-A1- 2012 195 496

## Description

### FIELD OF THE INVENTION

The present disclosure relates to a method for providing control data for an application vehicle when selectively applying pesticides, a method for avoiding/reducing resistances when selectively applying pesticides and a system for avoiding/reducing resistances when selectively applying pesticides.

### BACKGROUND OF THE INVENTION

In today's agricultural crop protection measures, a mixture comprising pesticides, growth regulators, liquid fertilizers and a carrier liquid is applied over the entire surface of a field to be treated. An adoption to the condition of the field and to the actual local demand for crop protection agents is not possible with such a full area application. For some time now, there is the possibility of a so-called sub-area specific application (in German:
"teilflachenspezifischer Einsatz"), so that only specific areas, i.e. target areas, of a field are treated with a respective product/mixture. In this respect, spraying vehicles may be used, which comprise separately controllable nozzles or groups of nozzles with which an application can be made to certain areas of the field only. Ideally, the application rate applied to non-target areas is zero. For the target areas, the application rate should correspond to the target/intended application rate. However, the transition of the application rate from zero to the target application rate involves a continuous, non-intermittent transition. If, for example, there are weeds in such transition areas, which were not detected by a weed sensor or not considered in a respective application map, it is possible that they are treated with a reduced application rate, i.e. an insufficient amount of pesticides. The reduced application rate in such a transition area may promote the formation of resistances to the pesticides used.

EP 3 262 934 A1 discloses a method for controlling weeds/weed grasses, a system for controlling weeds/weed grasses and the multiple use of digital application maps to avoid resistance when controlling weeds with herbicides.

In view of this, it is found that a further need exists to provide an improved method for avoiding or reducing the risk of resistances when selectively applying pesticides and a method for providing control data for an application vehicle when selectively applying pesticides.

### SUMMARY OF THE INVENTION

It is therefore an object of the present invention to provide an improved method for avoiding or at least reducing the risk of resistances when selectively applying pesticides and a method for providing control data for an application vehicle when selectively applying pesticides.

These and other objects, which become apparent upon reading the following description, are solved by the subject-matter of the independent claims. The dependent claims refer to preferred embodiments of the present disclosure.

According to a first aspect of the present disclosure, a method for providing control data for an application vehicle when selectively applying pesticides is provided, comprising the following steps: providing location data of sub-areas/target areas of a field to which at least one first pesticide has been applied in a first application; determining transition areas associated with the sub-areas to which the at least one first pesticide has been applied and the adjacent areas to which the at least one first pesticide has not been applied, based on the provided sub-area location data; providing control data for controlling an application vehicle for applying at least one second pesticide to the determined transition areas in a second application.

In other words, the present disclosure proposes to provide control data for an application vehicle for a second application, wherein the control data for the second application controls the application vehicle in such a way that at least the determined transition areas are treated with the at least one second pesticide in a second application. However, the second application is not limited to treat the transition areas only. In practice, not only the transition areas are treated with the second pesticide, but also the areas that were already treated during the first application, i.e. in such an example, the target areas previously treated with the first pesticide and also the transition areas are treated with the second pesticide in the second application with the target/intended application rate. By treating the transition areas where weeds could be located, which may not have been detected by a weed sensor or which have not been considered in a respective application map, it is possible to significantly reduce the risk of resistances developing in such transition areas, which may be treated in the first application with an insufficient amount of pesticides.

The term application vehicle is to be understood broadly and comprises any land or air supported device/machine suitable to selectively treat a field for weed infestation management. Preferably, the application vehicle is a spraying machine/device with which pesticides can be selectively applied to a field. The term pesticide is also to be understood broadly and comprises any product/active agent, irrespective of its state of aggregation, against which weeds may develop resistances. Moreover, the pesticide may also be applied together with other products. The sub-area location data may be provided in any data format that can be used to specify/indicate the spatial location/position of an area in a field which has been treated with the first pesticide, for example when applying the first pesticide, the respective GPS data may be recorded. A transition area is an area associated with a sub-area to which the at least one first pesticide has been applied and the adjacent area to which the at least one first pesticide has not been applied. It is preferred that the transition areas are areas partially covering the sub-area and partially covering the adjacent area to which the at least one first pesticide has not been applied. For example, the location data of a sub-area that has been treated with the first pesticide may be obtained by recording the location data where an application of the first pesticide has been initiated/switched on, i.e. where the transition of the application rate from zero to the target application rate begins. Subsequently, the transition areas are preferably determined in such a way that at least these areas are covered where the application rate increases from zero to the target application rate. Therefore, the transition areas may overlap into the sub-areas and into the adjacent areas where no first pesticide has been applied. The term control data is also to be understood in a broad sense and includes command data with which an application vehicle can be directly or indirectly controlled, e.g. the application of the second pesticide can be carried out automatically, wherein it is also possible that the application vehicle is steered automatically. The control data may also be provided as visual indications for a driver/farmer which may steer the application vehicle and may also control the use of the pesticide semi-automatically or manually based on the control data. Notably, the application of the first and second pesticide can be carried out in short-term intervals, for example within a few hours or days, or at longer intervals, for example several months apart.

In an embodiment, the method further comprises the step of applying in a first application the at least one first pesticide to a field, wherein the at least one first pesticide is applied only to determined sub-areas/target areas of the field. In an embodiment, the sub-areas to which the at least first pesticide has been applied in the first application are determined based on sensor data provided by at least one sensor unit of an application vehicle used for the first application of the at least one first pesticide to the field. For example, it is possible to use an application vehicle, e.g. a sprayer vehicle and/or a drone, comprising one or more weed sensors and whenever these sensors detect weeds, a target application rate of the first pesticide is applied to these areas automatically or semi-automatically, wherein the position data of the areas treated in this way with the first pesticide are recorded. These position data indicating where the first pesticide has been applied are then used to determine the transition areas for the application of the second pesticide. In such an application, therefore, no field data need to be recorded/captured in advance.

In an embodiment, the sub-areas to which the at least first pesticide is to be applied are provided by means of an application map of the field in which the sub-areas of the field are specified. In the application map, respective areas that need to be treated by the application vehicle are identified. Such an application map may be based on the results of an image analysis/classification method of images of the field. Notably, the term application map is also to be understood broadly and includes also corresponding data sets with position coordinates that are not represented in a visual form. For example, such an application map may be obtained by evaluating images of the field, e.g. drone images or satellite images, using an image analysis algorithm to identify weeds or weed nests. In such an application, the areas to be treated with the first pesticide are specified/determined in advance. Such a predetermination of the areas to be treated is more common in practice, as the application vehicle does not need to be equipped with the respective sensors. However, such an approach is somewhat problematic, in case the time delay between data collection and application of the first pesticide is too long increasing the risk of weeds spreading.

In an embodiment, the sub-areas to which the at least first pesticide is to be applied are provided by means of an application map of the field in which the sub-areas are pre-specified, wherein the pre-specified sub-areas are further specified based on sensor data provided by at least one sensor unit during the application of the first pesticide. Such a practice may further reduce the risk that weeds or weed nests are not captured, since the weeds and weed nests are detected at two different point in times.

In an embodiment, the transition area is an area adjacent to and/or at least partially overlapping with the sub-areas, which is in the range of greater or equal 5 cm to less or equal 50 cm wide, preferably in the range of greater or equal 10 cm to less or equal 40 cm and most preferably in the range of greater or equal 20 cm to less or equal 30 cm (e.g. a width, which extend in or across a driving direction of an application vehicle, e.g. a sprayer). In such an embodiment, the respective transition area is determined statically by determining a fixed peripheral zone around the sub-area that has been treated with the first pesticide during the first application, wherein this peripheral zone may also at least partially overlap the sub-area, i.e. the second pesticide is also partially applied onto the sub-area. This peripheral area may represent the transition area that is to be treated with the second pesticide with a target application rate. In a further example, a transition area can be an area that is equidistant from the acquired location data of the respective sub-areas during applying the first pesticide.

In an embodiment, the transition area is determined based on one or more parameters of the used application vehicle and/or the weather conditions during the first application of the at least one first pesticide. The parameters can be, for example: the valve switching times of the application vehicle, the spray characteristics, precipitation distribution, nozzle distances, droplet sizes, wind, driving speed of the application vehicle, boom height, boom vibrations, etc. This is because, among other factors, these parameters directly determine how long it takes until the application rate increases from an application rate of zero to the target application rate. The longer this takes, the larger the area that may have been treated with a too small amount of the first pesticide.

In an embodiment, the transition area is determined based on an application simulation model, preferably a spray simulation model. In an example, such a spray simulation model is based on the results of a machine-learning algorithm, e.g. neural networks. The machine-learning algorithm preferably comprises decision trees, naive bayes classifications, nearest neighbors, neural networks, convolutional neural networks, generative adversarial networks, support vector machines, linear regression, logistic regression, random forest and/or gradient boosting algorithms. Preferably, the machine-learning algorithm is organized to process an input having a high dimensionality into an output of a much lower dimensionality. Such a machine-learning algorithm is termed "intelligent" because it is capable of being "trained". The algorithm may be trained using records of training data. A record of training data comprises training input data and corresponding training output data. The training output data of a record of training data is the result that is expected to be produced by the machine-learning algorithm when being given the training input data of the same record of training data as input. The deviation between this expected result and the actual result produced by the algorithm is observed and rated by means of a "loss function". This loss function is used as a feedback for adjusting the parameters of the internal processing chain of the machine-learning algorithm. For example, the parameters may be adjusted with the optimization goal of minimizing the values of the loss function that result when all training input data is fed into the machine-learning algorithm and the outcome is compared with the corresponding training output data. The result of this training is that given a relatively small number of records of training data as "ground truth", the machine-learning algorithm is enabled to perform its job well for a number of records of input data that higher by many orders of magnitude. As input data for the trained machine-learning algorithm the valve switching times of the application vehicle, the spray characteristics, precipitation distribution, nozzle distances, droplet sizes, wind, driving speed of the application vehicle and/or boom height, boom vibrations may be used.

In an embodiment, the at least one first pesticide and the at least one second pesticide are pesticides comprising at least one different active agent. The use of different active agents in the pesticides can further reduce the risk of resistance formation. However, the present disclosure is not limited to the use of different active agents or different pesticides. In an example, the first and the second pesticide may be the same pesticide or comprising the same active agent.

In an embodiment the first pesticide and the second pesticide are not applied to the entire field.

In an embodiment, for the second application of the at least one second pesticide, an application map based on the determined transition areas is provided and wherein the control data for controlling an application vehicle is provided based on the determined transition areas. With respect to the terms application map and control data, it is referred to the above explanations, which also apply here.

In an embodiment, the first application and/or the second application is performed by means of a spraying vehicle, wherein the spraying vehicle preferably comprises at least one sensor unit for providing sensor data used for determining the sub-areas of the field to be applied with the at least one first pesticide.

According to a further aspect, a method for avoiding and/or at least limiting the risk of resistances when selectively applying pesticides is provided, comprising the following steps: first application of at least one first pesticide to a field, wherein the at least one first pesticide is applied only to determined sub-areas of the field; collecting location data of the sub-areas of the field to which the at least one first pesticide has been applied; determining a transition area associated with the sub-areas to which the at least one pesticide has been applied and the adjacent areas to which the at least one pesticide has not been applied, based on the collected sub-area location data; second application of at least one second pesticide to the determined transition areas. With respect to the understanding of the different terms, it is referred to the above explanations, which also apply here.

A further aspect relates to a use of a simulation model, preferably a spray simulation model, for determining the transition areas in one of the methods explained above. A further aspect relates to a use of an application vehicle, preferably a spraying vehicle, in one of the methods explained above. A further aspect relates to a use of control data provided by a method explained above in an application vehicle for applying at least one second pesticide to the determined transition areas. A further aspect relates to a use of location data of sub-areas of a field to which at least one first pesticide has been applied for determining transition areas associated with the sub-areas to which the at least one first pesticide has been applied and the adjacent areas to which the at least one first pesticide has not been applied in one of the methods explained above. Notably, the term "use in a method" has to be understood in that the mentioned data and/or models are used for performing/conducting/carrying out said method, e.g. in form of input data used for such a method or application.

According to a further aspect, a system for avoiding and/or reducing the risk of resistances when selectively applying pesticides is provided, comprising: at least one first application unit configured to apply at least one first pesticide to a field, wherein the at least one pesticide is applied only to determined sub-areas of the field; at least one data collecting unit configured to collect location data of the sub-areas of the field to which the at least one pesticide has been applied; at least one processing unit configured to determine a transition area associated with the sub-areas to which the at least one pesticide has been applied and the adjacent areas to which the at least one pesticide has not been applied, based on the collected sub-area location data; at least one second application unit configured to apply at least one second pesticide to the determined transition areas. With respect to the understanding of the different terms, it is referred to the above explanations, which also apply here.

Finally, the present invention also relates to a computer program or computer program element configured to execute the above explained method, on an appropriate apparatus or system. The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments. This exemplary embodiment of the invention covers both, a computer program that right from the beginning uses the invention and computer program that by means of an update turns an existing program into a program that uses invention. Further on, the computer program element might be able to provide all necessary steps to fulfill the procedure of an exemplary embodiment of the method as described above. According to a further exemplary embodiment of the present invention, a computer readable medium, such as a CD-ROM, USB stick or the like, is presented wherein the computer readable medium has a computer program element stored on it which computer program element is described by the preceding section. A computer program may be stored and/or distributed on a suitable medium, such as an optical storage medium or a solid state medium supplied together with or as part of other hardware, but may also be distributed in other forms, such as via the internet or other wired or wireless telecommunication systems. However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

### BRIEF DESCRIPTION OF THE DRAWINGS

In the following, the invention is described exemplarily with reference to the enclosed figure, in which
- **Figure 1**: is a schematic view of a field before a pesticide is applied;
- **Figure 2**: is a schematic view of the field shown in figure 1;
- **Figure 3**: is a schematic view of the field shown in figure 1;
- **Figure 4**: is a schematic view of a target area shown in figure 3;
- **Figure 5**: shows the application rate distribution along the line A-A shown in figure 4;
- **Figure 6**: shows the application rate distribution along the line B-B shown in figure 4;
- **Figure 7**: is a schematic overview of a method for providing control data for an application vehicle according to the present disclosure;
- **Figure 8**: is a schematic overview of a method for avoiding and/or reducing the risk of resistances according to the present disclosure; and
- **Figure 9**: is a schematic view of a target area comprising transition areas.

### DETAILED DESCRIPTION OF EMBODIMENT

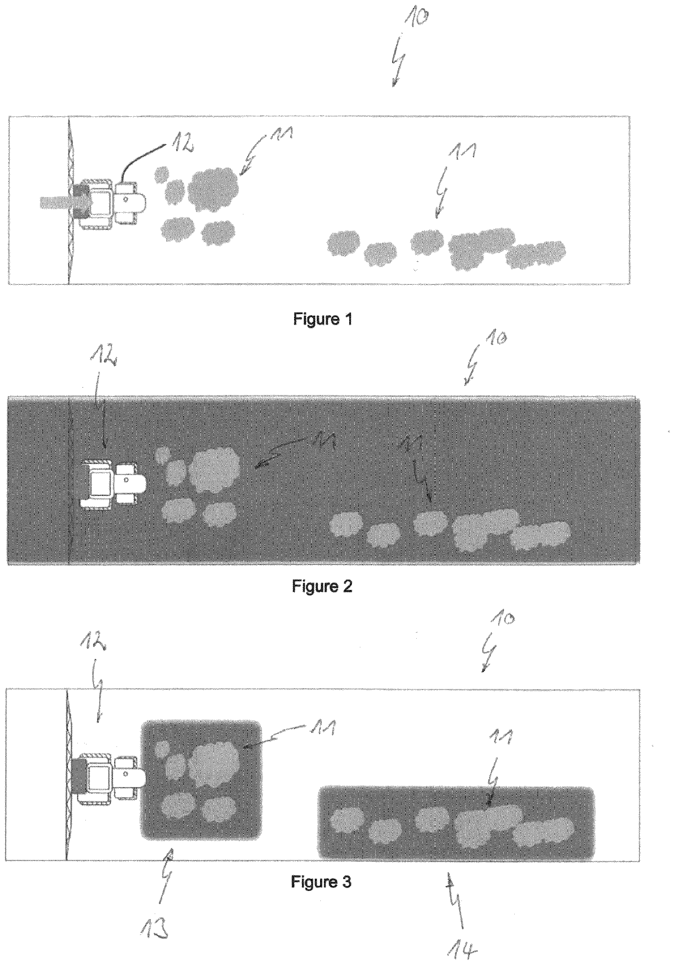

Figure 1 shows a schematic view of a field 10 with weed nests 11 which should be treated with a pesticide applied by an application vehicle 12, e.g. a sprayer 12. As shown in figure 2, it is still common practice, in today's agricultural crop protection measures to apply a mixture comprising pesticides, growth regulators, liquid fertilizers and a carrier liquid over the entire surface of the field 10. However, as shown in figure 3, it is also possible to treat only specific sub-areas 13, 14, i.e. target areas 13, 14, where the weed nests are located. Such application is called sub-area specific application ("teilflächenspezifischer Einsatz"). In this respect, spraying vehicles may be used, which comprise separately controllable nozzles or groups of nozzles with which an application can be made to certain areas of the field only. Ideally, the application rate applied to non-target areas is zero. For the target areas, the application rate should correspond to the target/intended application rate. However, the transition of the application rate from zero to the target application rate involves a continuous, non-intermittent transition. If, for example, there are weeds in such a transition area, which were not detected by a weed sensor or not considered in a respective application map, it is possible that they are treated with a reduced application rate, i.e. an insufficient amount of pesticides. The reduced application rate in such a transition area may promote the formation of resistance to the pesticides used.

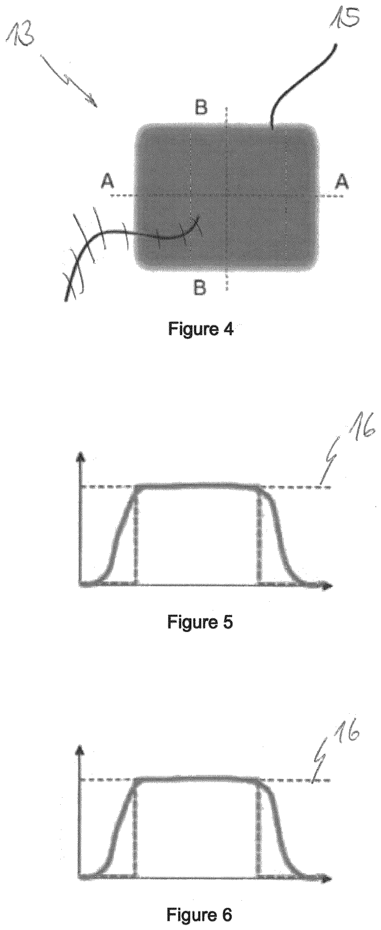

Figure 4 shows the target area 13 of figure 3 in an enlarged view. At the peripheral areas 15, it may occur that such an area is treated with a reduced application rate compared to the target/desired application rate. Figure 5 illustrates the application rate of the pesticide (y-axis) along the line A-A (x-axis) of figure 4. As can be seen, the application rate in the peripheral areas 15 of the target area 13 does not reach the desired target application rate (indicated by the horizontal dotted line 16). This can happen, for example, if this area is located at the edge of the spray nozzles or if the application of the pesticide has just started. Figure 6 shows the application rate of the pesticide (y-axis) along the line B-B (x-axis). Again, for the same reasons, the application rate in the peripheral areas 15 may be too low and corresponding resistances may develop. The extent of these peripheral areas 15 depends on several influencing parameters such as valve switching times, spray characteristics, precipitation distribution, nozzle distance, droplet size, wind, driving speed, boom height, boom vibrations, etc. Moreover, there is the possibility that not all weeds or weed nests are completely detected and the size of the sub-area 13 is too small. For example, it may happen that individual weeds may be covered by the crop, soil or stones and thus are not detected by the weed sensor, for example. Also in such a case, a weed may be located in the peripheral areas 15.

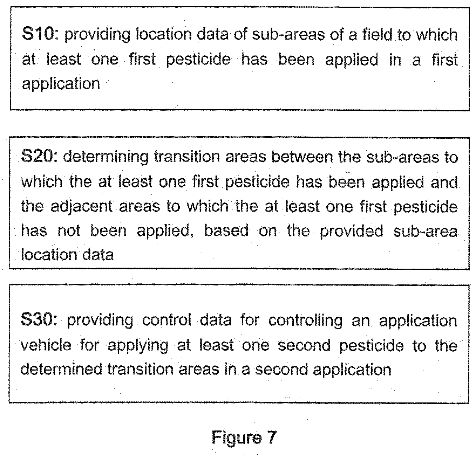

Figure 7 is an illustration of a method for providing control data for an application vehicle 12 according to the present disclosure. In a step S10, location data of sub-areas/target areas 13, 14 of a field 10 to which at least one first pesticide has been applied in a first application are provided. For example, the location data of a sub-area that has been treated with the first pesticide can be obtained by recording the location data where an application of the first pesticide is initiated/switched on, i.e. where the transition of the application rate from zero to the target application rate begins.

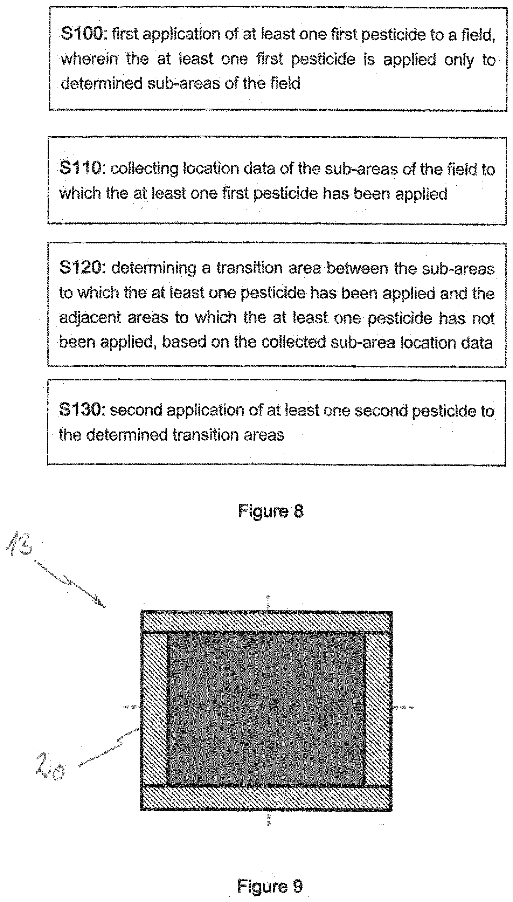

In a step S20, transition areas 20 (cf. figure 9) associated with the sub-areas/target areas 13, 14 to which the at least one first pesticide has been applied and the adjacent areas to which the at least one first pesticide has not been applied, based on the provided sub-area location data, are determined. In an example, the transition area 20 may be an area bordering on the sub-areas 13, 14, which is between 5 cm and 50 cm wide, preferably between 10 cm and 40 cm and most preferably between 20 cm and 30 cm. In such an example, the respective transition area 20 is determined statically by determining a fixed peripheral zone around the sub-area 13, 14 that has been treated with the first pesticide during the first application. In such an example, the transition areas 20 covers a part of the sub-area 20 and a part of the adjacent areas which have not been treated with the first pesticide. In an example, the location/position where an application of the first pesticide has been initiated/switched on, is located in the center/middle of the transition areas 20.

In a further example, the transition area 20 is determined based on one or more parameters of the used application vehicle 12 and/or parameters of the weather conditions during the first application of the at least one first pesticide. The parameters can be, for example, the valve switching times of the application vehicle 12, the spray characteristics, precipitation distribution, nozzle distances, droplet sizes, wind, driving speed of the application vehicle 12, boom height, boom vibrations, etc. In a still further example, the transition area 20 may be determined based on an application simulation model, preferably a spray simulation model. In a further example, such a spray simulation model may be based on the results of a machine-learning algorithm, e.g. neural networks. The purpose of such a determination is to evaluate where the first pesticide has not been applied with the target application rate such that the transition areas can be determined such that such areas are covered.

In a step S30, control data for controlling an application vehicle 12, e.g. a sprayer 12, for applying at least one second pesticide to the determined transition areas 20 in a second application are provided. The control data may be provided by command data with which the application vehicle 12 can be directly controlled, e.g. the application of the pesticide can be carried out automatically, wherein it is also possible that the application vehicle 12 is steered automatically. However, the control data may also be provided as visual indications for a farmer which may steer the application vehicle 12 and may also control the use of the pesticide semi-automatically or manually.

Figure 8 is an illustration of a method for avoiding/reducing resistances when selectively applying pesticides. In a step S100, at least one first pesticide is applied to a field 10, wherein the at least one first pesticide is applied only to determined sub-areas/target areas 13, 14 of the field 10.

In an example, the sub-areas 13, 14 to which the at least first pesticide is applied in the first application are determined based on sensor data provided by at least one sensor unit of an application vehicle 12 used for the first application of the at least one first pesticide to the field. For example, it is possible to use an application vehicle 12, e.g. a sprayer vehicle 12 and/or a drone, comprising one or more weed sensors and whenever these sensors detect weeds, a target application rate of the first pesticide is applied to these areas automatically or semi-automatically, wherein the location data of the sub-areas 13, 14 of the field to which the at least one first pesticide has been applied are collected in a step 5110. These position data indicating where the first pesticide has been applied are then used to determine in a step S120 the transition areas 20 for the application of the second pesticide in a subsequent step S130.

Figure 9 is an illustration of the target area 13 shown in figure 4. In this illustration, the determined transition areas 20 are illustrated covering the peripheral areas 15 of the target area 13. By means of the second application, at least these transition areas 20 should be treated with the second pesticide. However, in practice not only the transition areas 20 are treated with the second pesticide, but also the rest of the target area 13.

Although illustrative examples of the present disclosure have been described above, in part with reference to the accompanying drawings, it is to be understood that the disclosure is not limited to these examples. Variations to the disclosed examples can be understood and effected by those skilled in the art in practicing the appended claims.

In the claims, any reference signs placed between parentheses shall not be construed as limiting the claim. The term "comprising" does not exclude the presence of elements or steps other than those listed in a claim. The word "a" or "an" preceding an elements does not exclude the presence of a plurality of such elements. The disclosure can be implemented by means of hardware comprising several distinct elements.

### Reference List

- 10: field
- 11: weeds
- 12: application vehicle/sprayer
- 13: target area/sub-area
- 14: target area/sub-area
- 15: peripheral area
- 16: desired target application rate
- 20: transition area

## Claims

1. Method for providing control data for an application vehicle (12) when selectively applying pesticides, comprising the following steps:
providing (S10) location data of sub-areas (13, 14) of a field (10) to which at least one first pesticide has been applied in a first application;
determining (S20) transition areas (20) associated with the sub-areas (13, 14) to which the at least one first pesticide has been applied and the adjacent areas to which the at least one first pesticide has not been applied, based on the provided sub-area location data;
providing (S30) control data for controlling an application vehicle (12) for applying at least one second pesticide to the determined transition areas (20) in a second application.

2. Method according to claim 1, wherein the method further comprises the step of applying in a first application the at least one first pesticide to a field (10), wherein the at least one first pesticide is applied only to determined sub-areas (13, 14) of the field (10).

3. Method according to claim 2, wherein the sub-areas (13, 14) to which the at least one first pesticide is to be applied are provided by means of an application map of the field (10) in which the sub-areas (13, 14) of the field (10) are specified.

4. Method according to claim 2, wherein the sub-areas (13, 14) to which the at least one first pesticide is to be applied are provided by means of an application map of the field (10) in which the sub-areas (13, 14) are pre-specified, wherein the pre-specified sub-areas (13, 14) are further specified based on sensor data provided by at least one sensor unit during the application of the at least one first pesticide.

5. Method according to any one of the proceedings claims, wherein the transition areas (20) are areas bordering on the sub-areas (13, 14), which are in the range of greater or equal 5 cm to less or equal 50 cm wide, preferably in the range of greater or equal 10 cm to less or equal 40 cm and most preferably in the range of greater or equal 20 cm to less or equal 30 cm and/or wherein the transition areas (20) are determined based on at least one parameter of the used application vehicle (12) and/or weather conditions during the first application of the at least one first pesticide and/or wherein the transition areas (20) are determined based on an application simulation model.

6. Method according to any one of the proceedings claims, wherein the at least one first pesticide and the at least one second pesticide are pesticides comprising at least one different active agent.

7. Method according to any one of the proceedings claims, wherein for the second application of the at least one second pesticide, an application map based on the determined transition areas (20) is provided and wherein the control data for controlling an application vehicle (12) is provided based on the determined transition areas (20).

8. Method for avoiding/reducing resistances when selectively applying pesticides, comprising the following steps:
first application (S100) of at least one first pesticide to a field (10), wherein the at least one first pesticide is applied only to determined sub-areas (13, 14) of the field (10);
collecting (S110) location data of the sub-areas (13, 14) of the field (10) to which the at least one first pesticide has been applied;
determining (S120) transition areas (20) associated with the sub-areas (13, 14) to which the at least one pesticide has been applied and the adjacent areas to which the at least one pesticide has not been applied, based on the collected sub-area location data;
second application (S130) of at least one second pesticide to the determined transition areas (20).

9. Use of a simulation model, preferably a spray simulation model, for determining the transition areas (20) in a method according to any one of claims 1 to 8.

10. Use of an application vehicle (12), preferably a spraying vehicle, in a method according to any one of claims 1 to 8.

11. Use of control data provided by a method according to any one of claims 1 to 8 in an application vehicle (12) for applying at least one second pesticide to the determined transition areas (20).

12. Use of location data of sub-areas (13, 14) of a field (10) to which at least one first pesticide has been applied for determining transition areas (20) associated with the sub-areas (13, 14) to which the at least one first pesticide has been applied and the adjacent areas to which the at least one first pesticide has not been applied in a method according to any one of claims 1 to 8.

13. A system for reducing/avoiding resistances when selectively applying pesticides, comprising:
at least one first application unit configured to apply at least one first pesticide to a field (10), wherein the at least one first pesticide is applied only to determined sub-areas (13, 14) of the field (10); **characterized in that**
at least one data collecting unit configured to collect location data of the sub-areas (13, 14) of the field (10) to which the at least one first pesticide has been applied;
at least one processing unit configured to determine transition areas associated with the sub-areas (13, 14) to which the at least one first pesticide has been applied and the adjacent areas to which the at least one first pesticide has not been applied, based on the collected sub-area location data;
at least one second application unit configured to apply at least one second pesticide to the determined transition areas (20).

14. A computer program element which when executed by a processor in a system according to claim 13 is configured to carry out a method according to any one of claims 1 to 8.

15. Control device configured to perform steps of the method according to any one of claims 1 to 8, and a computer-readable medium which stores the computer program element according to claim 14.

## Patentansprüche

1. Verfahren zum Bereitstellen von Steuerdaten für ein Anwendungsfahrzeug (12) bei selektiver Anwendung von Pestiziden, das folgende Schritte umfasst:
Bereitstellen (S10) von Ortsdaten von Teilbereichen (13, 14) eines Feldes (10), auf das bei einer ersten Anwendung mindestens ein erstes Pestizid angewendet worden ist;
Bestimmen (S20) von Übergangsbereichen (20), die den Teilbereichen (13, 14) zugehörig sind, auf welchen das mindestens eine erste Pestizid angewendet worden ist, und der angrenzenden Bereiche, auf denen das mindestens eine erste Pestizid nicht angewendet worden ist, auf der Grundlage der bereitgestellten Ortsdaten der Unterbereiche;
Bereitstellen (S30) von Steuerdaten für das Steuern eines Anwendungsfahrzeugs (12) für das Anwenden von mindestens einem zweiten Pestizid auf den bestimmten Übergangsbereichen (20) in einer zweiten Anwendung.

2. Verfahren nach Anspruch 1, wobei das Verfahren ferner den Schritt umfasst, des Anwendens des mindestens einen ersten Pestizids in einer ersten Anwendung auf ein Feld (10), wobei das mindestens eine erste Pestizid nur auf die bestimmten Teilbereiche (13, 14) des Feldes (10) angewendet wird.

3. Verfahren nach Anspruch 2, wobei die Teilbereiche (13, 14), auf die das mindestens eine erste Pestizid angewendet werden soll, mittels einer Applikationskarte des Feldes (10) bereitgestellt werden, in der die Teilbereiche (13, 14) des Feldes (10) spezifiziert sind.

4. Verfahren nach Anspruch 2, wobei die Teilbereiche (13, 14), auf die das mindestens eine erste Pestizid angewendet werden soll, mittels einer Applikationskarte des Feldes (10) bereitgestellt werden, in der die Teilbereiche (13, 14) vorspezifiziert sind, wobei die vorspezifizierten Teilbereiche (13, 14) auf der Grundlage von Sensordaten weiter spezifiziert werden, die von mindestens einer Sensoreinheit während der Anwendung des mindestens einen ersten Pestizids bereitgestellt werden.

5. Verfahren nach einem der vorausgehenden Ansprüche, wobei die Übergangsbereiche (20) an die Teilbereiche (13, 14) angrenzende Bereiche sind, die im Bereich von größer oder gleich 5 cm bis kleiner oder gleich 50 cm breit sind, vorzugsweise im Bereich von größer oder gleich 10 cm bis kleiner oder gleich 40 cm und am meisten bevorzugt im Bereich von größer oder gleich 20 cm bis kleiner oder gleich 30 cm und/oder wobei die Übergangsbereiche (20) auf der Grundlage mindestens eines Parameters des verwendeten Anwendungsfahrzeugs (12) bestimmt werden und/oder der Wetterbedingungen während der ersten Anwendung des mindestens einen ersten Pestizids und/oder wobei die Übergangsbereiche (20) auf der Grundlage eines Anwendungssimulationsmodells bestimmt werden.

6. Verfahren nach einem der vorausgehenden Ansprüche, wobei das mindestens eine erste Pestizid und das mindestens eine zweite Pestizid Pestizide sind, die mindestens einen unterschiedlichen Wirkstoff enthalten.

7. Verfahren nach einem der vorausgehenden Ansprüche, wobei für die zweite Anwendung des mindestens einen zweiten Pestizids eine Applikationskarte auf der Grundlage der bestimmten Übergangsbereiche (20) bereitgestellt wird und wobei die Steuerdaten zur Steuerung eines Anwendungsfahrzeugs (12) auf der Grundlage der bestimmten Übergangsbereiche (20) bereitgestellt werden.

8. Verfahren zur Vermeidung/Verringerung von Resistenzen bei selektiver Anwendung von Pestiziden, umfassend folgende Schritte:
erste Anwendung (S100) von mindestens einem ersten Pestizid auf einem Feld (10), wobei das mindestens eine erste Pestizid nur auf bestimmte Teilbereiche (13, 14) des Feldes (10) angewendet wird;
Sammeln (S110) von Ortsdaten der Teilflächen (13, 14) des Feldes (10), auf denen das mindestens eine erste Pestizid ausgebracht worden ist;
Bestimmen (S120) von Übergangsbereichen (20), die den Teilbereichen (13, 14) zugehörig sind, auf denen das mindestens eine Pestizid angewendet worden ist, und der angrenzenden Bereiche, auf denen das mindestens eine Pestizid nicht angewendet worden ist, auf der Grundlage der gesammelten Daten über den Ort der Teilbereiche;
zweite Anwendung (S130) von mindestens einem zweiten Pestizid auf die bestimmten Übergangsbereiche (20).

9. Verwendung eines Simulationsmodells, vorzugsweise eines Sprühsimulationsmodells, zur Bestimmung der Übergangsbereiche (20) in einem Verfahren nach einem der Ansprüche 1 bis 8.

10. Verwendung eines Anwendungsfahrzeugs (12), vorzugsweise eines Sprühfahrzeugs, in einem Verfahren nach einem der Ansprüche 1 bis 8.

11. Verwendung von Steuerdaten, die durch ein Verfahren nach einem der Ansprüche 1 bis 8 in einem Anwendungsfahrzeugs (12) bereitgestellt werden, um mindestens ein zweites Pestizid auf die bestimmten Übergangsbereiche (20) anzuwenden.

12. Verwendung von Ortsdaten von Teilbereichen (13, 14) eines Feldes (10), auf dem mindestens ein erstes Pestizid angewendet worden ist, zur Bestimmung von Übergangsbereichen (20), die den Teilflächen (13, 14) zugehörig sind, auf denen das mindestens eine erste Pestizid ausgebracht wurde, und den angrenzenden Bereichen, auf denen das mindestens eine erste Pestizid nicht in einem Verfahren nach einem der Ansprüche 1 bis 8 angewendet worden ist.

13. System zur Reduzierung/Vermeidung von Resistenzen bei selektiver Anwendung von Pestiziden, umfassend:
mindestens eine erste Anwendungseinheit, die so konfiguriert ist, dass mindestens ein erstes Pestizid auf einem Feld (10) angewendet wird, wobei das mindestens eine erste Pestizid nur auf bestimmte Teilbereiche (13, 14) des Feldes (10) ausgebracht wird;
**dadurch gekennzeichnet, dass**
mindestens eine Datensammeleinheit, die für die Sammlung von Ortsdaten der Teilbereiche (13, 14) des Feldes (10) konfiguriert ist, auf denen mindestens ein erstes Pestizid angewendet worden ist;
mindestens eine Verarbeitungseinheit, die konfiguriert ist, um Übergangsbereiche zu bestimmen, die den Teilbereichen (13, 14) zugehörig sind, auf denen das mindestens eine erste Pestizid angewendet worden ist, und den angrenzenden Bereichen, auf denen das mindestens eine erste Pestizid nicht angewendet worden ist, auf der Grundlage der gesammelten Ortsdaten der Teilbereiche;
mindestens eine zweite Anwendungseinheit, die so konfiguriert ist, dass mindestens ein zweites Pestizid auf die bestimmten Übergangsbereiche angewendet wird (20).

14. Computerprogrammelement, das, wenn es von einem Prozessor in einem System nach Anspruch 13 ausgeführt wird, so konfiguriert ist, dass es ein Verfahren nach einem der Ansprüche 1 bis 8 ausführt.

15. Steuereinrichtung, die konfiguriert ist, um Schritte des Verfahrens nach einem der Ansprüche 1 bis 8 auszuführen, und ein computerlesbares Medium, das das Computerprogrammelement nach Anspruch 14 speichert.

## Revendications

1. Procédé de fourniture de données de contrôle pour un véhicule d'application (12) lors de l'application sélective de pesticides, comprenant les étapes suivantes :
fournir (S10) des données de localisation de sous-zones (13, 14) d'un champ (10) sur lesquelles au moins un premier pesticide a été appliqué lors d'une première application ;
déterminer (S20) les zones de transition (20) associées aux sous-zones (13, 14) sur lesquelles au moins un premier pesticide a été appliqué et les zones adjacentes auxquelles au moins un premier pesticide n'a pas été appliqué, sur la base des données de localisation de la sous-zone fournies ;
fournissant des données de contrôle (S30) pour le contrôle d'un véhicule d'application (12) pour l'application d'au moins un deuxième pesticide sur les zones de transition déterminées (20) lors d'une deuxième application.

2. Procédé selon la revendication 1, dans lequel le procédé comprend en outre l'étape consistant à appliquer dans une première application au moins un premier pesticide sur un champ (10), dans lequel le ou les premiers pesticides sont appliqués uniquement sur des sous-zones déterminées (13, 14) du champ (10).

3. Procédé selon la revendication 2, dans lequel les sous-zones (13, 14) sur lesquelles au moins un premier pesticide doit être appliqué sont fournies au moyen d'une carte d'application du champ (10) dans lequel les sous-zones (13, 14) du champ (10) sont spécifiées.

4. Procédé selon la revendication 2, dans lequel les sous-zones (13, 14) sur lesquelles au moins un premier pesticide doit être appliqué sont fournies au moyen d'une carte d'application du champ (10) dans lequel les sous-zones (13, 14) sont préspécifiées, dans laquelle les sous-zones préspécifiées (13, 14) sont spécifiées en outre sur la base des données de capteur fournies par au moins un capteur lors de l'application du ou des premiers pesticides.

5. Procédé selon l'une quelconque des revendications de la procédure, dans lequel les zones de transition (20) sont des zones bordant les sous-zones (13, 14), qui sont comprises entre 5 cm et 50 cm de large, de préférence dans la plage de 10 cm à 40 cm et de préférence dans la plage de 20 cm à 30 cm de moins ou 30 cm et/ ou dans lequel les zones de transition (20) sont déterminées sur la base d'au moins un paramètre du véhicule d'application utilisé (12) et/ou des conditions météorologiques lors de la première application du ou des premiers pesticides et/ou dans lequel les zones de transition (20) sont déterminées sur la base d'un modèle de simulation d'application.

6. Procédé selon l'une quelconque des revendications de la procédure, dans lequel le ou les au moins un premier pesticide et le au moins un second pesticide sont des pesticides comprenant au moins un agent actif différent.

7. Procédé selon l'une quelconque des revendications de la procédure, dans lequel pour la deuxième application du ou des seconds pesticides, une carte d'application basée sur les zones de transition déterminées (20) est fournie et dans laquelle les données de contrôle pour le contrôle d'un véhicule d'application (12) sont fournies sur la base des zones de transition déterminées (20).

8. Procédé pour éviter/réduire les résistances lors de l'application sélective de pesticides, comprenant les étapes suivantes :
première application (S100) d'au moins un premier pesticide sur un champ (10), dans lequel le ou les premiers pesticides sont appliqués uniquement sur des sous-zones déterminées (13, 14) du champ (10) ;
collecter (S110) des données de localisation des sous-zones (13, 14) du champ (10) sur lesquelles au moins un premier pesticide a été appliqué ;
déterminer (S120) les zones de transition (20) associées aux sous-zones (13, 14) sur lesquelles au moins un pesticide a été appliqué et les zones adjacentes auxquelles le ou les pesticides n'ont pas été appliqués, sur la base des données de localisation des sous-zones collectées ;
deuxième application (S130) d'au moins un deuxième pesticide dans les zones de transition déterminées (20).

9. Utilisation d'un modèle de simulation, de préférence un modèle de simulation de pulvérisation, pour déterminer les zones de transition (20) dans un procédé selon l'une quelconque des revendications 1 à 8.

10. Utilisation d'un véhicule d'application (12), de préférence un véhicule de pulvérisation, selon l'une quelconque des revendications 1 à 8.

11. Utilisation de données de contrôle fournies par un procédé selon l'une quelconque des revendications 1 à 8 dans un véhicule d'application (12) pour l'application d'au moins un second pesticide sur les zones de transition déterminées (20).

12. Utilisation de données de localisation de sous-zones (13, 14) d'un champ (10) sur lesquelles au moins un premier pesticide a été appliqué pour déterminer les zones de transition (20) associées aux sous-zones (13, 14) sur lesquelles au moins un premier pesticide a été appliqué et les zones adjacentes sur lesquelles au moins un premier pesticide n'a pas été appliqué dans un procédé selon l'une quelconque des revendications 1 à 8.

13. Système de réduction/d'évitement des résistances lors de l'application sélective de pesticides, comprenant :
au moins une première unité d'application configurée pour appliquer au moins un premier pesticide sur un champ (10), dans laquelle au moins un premier pesticide est appliqué uniquement sur des sous-zones déterminées (13, 14) du champ (10) ; **caractérisé en ce que**
au moins une unité de collecte de données configurée pour collecter des données de localisation des sous-zones (13, 14) du champ (10) sur lesquelles au moins un premier pesticide a été appliqué ;
au moins une unité de transformation configurée pour déterminer les zones de transition associées aux sous-zones (13, 14) sur lesquelles au moins un premier pesticide a été appliqué et les zones adjacentes sur lesquelles au moins un premier pesticide n'a pas été appliqué, sur la base des données de localisation de sous-zones collectées ;
au moins une deuxième unité d'application configurée pour appliquer au moins un deuxième pesticide sur les zones de transition déterminées (20).

14. Elément de programme d'ordinateur qui, lorsqu'il est exécuté par un processeur dans un système selon la revendication 13, est configuré pour mettre en oeuvre un procédé selon l'une quelconque des revendications 1 à 8.

15. Dispositif de commande configuré pour exécuter des étapes du procédé selon l'une quelconque des revendications 1 à 8, et support lisible par ordinateur qui stocke l'élément de programme d'ordinateur selon la revendication 14.
